# DEMANDE DE BREVET EUROPEEN

(11) **EP 4 559 745 A1**
(43) Date de publication de la demande: **28.05.2025**
(21) Numéro de dépôt: 24212958.3
(22) Date de dépôt: 14.11.2024
(51) Int. Cl.: B60N 2/20, B60N 2/34, B60P 3/39, B60N 2/36, B60R 5/04

(54) **VÉHICULE AUTOMOBILE COMPRENANT UNE PLAGE ARRIÈRE MULTIFONCTION ET PROCÉDÉ DE TRANSFORMATION D'UN HABITACLE DU VÉHICULE EN ESPACE DE COUCHAGE**

(30) Priorité: 27.11.2023 FR 2313125
(71) Demandeur: Renault s.a.s, 92100 Boulogne Billancourt (FR)
(72) Inventeur: BUET, Gael, 78280 GUYANCOURT (FR); LECROISEY, Sebastien, 78280 GUYANCOURT (FR); MASSON, Xavier, 78280 GUYANCOURT (FR); RANDAZZINI, Marc, 78280 GUYANCOURT (FR); ROY, Jean-Baptiste, 78280 GUYANCOURT (FR); SOUVILLE, Philippe, 78280 GUYANCOURT (FR)

(57) **Abrégé**

Véhicule (1) automobile comprenant un plancher (2) s'étendant dans un plan (XY) comprenant un axe longitudinal (X) et un axe transversal (Y), un habitacle (6) comprenant une première rangée (7) d'au moins un siège et une deuxième rangée (8) d'au moins un siège espacé de la première rangée (7), le siège de la deuxième rangée (8) comprenant une assise (8a) et un dossier (8b) articulé par rapport à l'assise (8a) entre une position d'utilisation et une position repliée dans laquelle le dossier (8b) s'étend selon l'axe longitudinal (X) du véhicule, le véhicule (1) comprenant en outre un espace de coffre (9) situé à l'arrière de la deuxième rangée (8) de siège.

Le véhicule comprend une plage arrière (10) multifonction configurée pour passer d'une position de stockage dans laquelle la plage arrière (10) est solidaire du véhicule (1) et s'étend depuis une extrémité supérieure d du dossier de la deuxième rangée (8) de siège selon l'axe longitudinal (X) en partie dans l'espace de coffre (9) et une position de support, dans laquelle, dans la position repliée de la deuxième rangée (8) de siège, la plage arrière (10) s'étend entre la première et la deuxième rangées de siège (7, 8) dans la continuité longitudinale d'une surface supérieure (8d) du dossier de la deuxième rangée (8) de siège.

## Description

La présente invention concerne le domaine des véhicules automobiles et notamment la transformation d'un habitacle d'un véhicule automobile en un espace de couchage.

Les utilisateurs sont de plus en plus avides d'escapades et tendent à apporter des éléments extérieurs permettant de transformer une partie de l'habitacle en en espace de nuit afin, notamment de dormir dans le véhicule.

Pour répondre à ce besoin, des kits externes tels que des caisses de rangement contenant notamment un sommier dépliable ont été développées afin d'être positionnées dans le coffre du véhicule.

Toutefois, une telle solution réduit considérablement le volume disponible du coffre une fois la caisse de rangement embarquée.

Il existe donc un besoin d'améliorer la transformation d'un habitacle d'un véhicule automobile en un espace de couchage sans impacter le volume disponible dans le coffre du véhicule.

L'objectif de la présente invention est de prévoir dès la conception du véhicule automobile, les équipements nécessaires à la transformation d'une partie de l'habitacle en espace de nuit.

La présente invention a pour objet un véhicule automobile comprenant un plancher s'étendant dans un plan comprenant un axe longitudinal et un axe transversal, un habitacle comprenant une première rangée d'au moins un siège et une deuxième rangée d'au moins un siège espacé d'une distance longitudinale de la première rangée.

Le siège de la deuxième rangée comprend une assise et un dossier articulé par rapport à l'assise selon un axe d'articulation transversal ou articulation transversale entre une position d'utilisation, dans laquelle l'assise et le dossier forment un angle compris entre 80° et 120° l'un par rapport à l'autre et une position repliée dans laquelle le dossier et rapproché de l'assise correspondante et s'étend selon l'axe longitudinal du véhicule, de préférence sensiblement parallèle au plancher.

Le véhicule comprend en outre un espace de coffre situé à l'arrière de la deuxième rangée de siège.

Le véhicule comprend une plage arrière multifonction configurée pour passer d'une position de stockage dans laquelle la plage arrière est solidaire du véhicule et s'étend depuis une extrémité supérieure du dossier de la deuxième rangée de siège selon l'axe longitudinal en partie dans l'espace de coffre et une position de support, dans laquelle, dans la position repliée de la deuxième rangée siège, la plage arrière s'étend dans la distance longitudinale entre la première et la deuxième rangées de siège dans la continuité longitudinale d'une surface supérieure du dossier de la deuxième rangée de siège.

Grâce à la plage arrière multifonction, on bénéficie d'un équipement intégré à la conception du véhicule capable de jouer le rôle de support pour un matelas de couchage et de table.

L'espace de coffre est accessible par l'utilisateur une fois la porte du coffre du véhicule ouverte.

Avantageusement, l'axe d'articulation transversal reliant le dossier et l'assise du siège de la deuxième rangée de siège est monté en translation dans un rail dédié solidaire de l'assise et du dossier, de sorte que lors du pivotement du dossier autour de l'axe d'articulation transversal, ledit axe d'articulation transversal se déplace verticalement vers le haut selon l'axe vertical notamment pour permettre au dossier d'adopter une position parallèle à l'axe longitudinal du véhicule, c'est-à-dire la plus horizontale possible.

Par exemple, la distance longitudinale entre la première et la deuxième rangée de siège(s) est comprise entre 15cm et 50cm.

De préférence, chaque siège de la première rangée de sièges et/ou la deuxième rangée de siège(s) est monté coulissant selon l'axe longitudinal par rapport au plancher du véhicule, par exemple dans des rails dédiés.

La deuxième rangée de sièges peut comprendre un seul siège délimitant deux ou trois assises ou comprendre deux ou trois parties délimitant chacune une ou deux assises.

La liaison des sièges au plancher, ainsi que la configuration des sièges est connu en soi et ne sera pas davantage décrite.

Avantageusement, le véhicule comprend en outre un plancher secondaire solidaire du véhicule automobile dans la position de stockage et dans la position de support et configuré pour passer de la position de stockage, dans laquelle le plancher secondaire obstrue un logement dans le plancher du véhicule, généralement comprenant des accessoires tels que les triangles de signalisation, etc...,et la position de support, dans laquelle, le plancher secondaire s'étend depuis la deuxième rangée de siège en partie dans l'espace coffre dans la continuité longitudinale de la surface supérieure du dossier de ladite deuxième rangée, du côté opposé à la plage arrière.

Ainsi, dans la position de support, la portion principale de la plage arrière, la surface arrière des dossiers de la deuxième rangée de sièges et le plancher secondaire forment ensemble une surface de support plane s'étendant dans le plan XY, sensiblement horizontale et configurée pour recevoir un équipement, tel qu'un matelas ou un sommier supplémentaire.

La surface de support est située à une hauteur du toit du véhicule suffisamment grande pour permettre à l'utilisateur d'être assis sans toucher le toit. La distance verticale entre la surface de support et le toit du véhicule est comprise entre 50cm et 1,50m. Le but est de pouvoir se retourner voire passer d'une position allongée sur le dos à allongée sur le ventre sans avoir à sortir du véhicule.

Par « hauteur », on entend la dimension dans la direction verticale.

De préférence, la surface de support est située à une hauteur sous les ouvrants du véhicule afin d'éviter tout endommagement accidentel desdites ouvrants.

Avantageusement, la plage arrière comprend une portion principale sensiblement plane délimitée latéralement par deux côtés transversaux et deux côtés longitudinaux et au moins une partie formant support de la portion principale dans la position de support.

Les côtés transversaux présentent, par exemple, une longueur supérieure à la longueur des côtés longitudinaux, de manière à conférer à la portion principale plane une forme de rectangle.

La dimension des côtés transversaux et des côtés longitudinaux est, de préférence, inférieure à la dimension de la distance entre la première et la deuxième rangées de siège.

Avantageusement, dans la position de support, la partie formant support s'étend verticalement, selon une direction perpendiculaire à la portion principale de la plage arrière et est en appui sur la surface supérieure du plancher.

Selon un mode de réalisation, la plage arrière comprend quatre parties formant support situées à chaque coin de la portion principale.

Ainsi, les parties formant support forment des pieds de support pour la portion principale.

En variante, on pourrait prévoir trois parties formant support ou une seule partie formant support située au centre de la portion principale.

De préférence, dans la position de stockage, les côtés longitudinaux de la portion principale de la plage arrière sont solidaires de parois latérales de l'espace de coffre, par exemple par emboîtage dans une rainure ou rail de guidage supérieure correspondante prévue dans chaque paroi latérale.

Les rainures de guidage supérieures s'étendent selon l'axe longitudinal et sont parallèles entre elles.

Selon un mode de réalisation, dans la position de stockage, les parties formant support s'étendent verticalement vers le toit du véhicule et sont configurées pour coopérer avec des rainures verticales dans les parois latérales de l'espace de coffre.

Selon un mode de réalisation, la plage arrière est formée de manière monobloc, par exemple par injection plastique.

Selon un autre mode de réalisation, les parties formant support sont distinctes de la portion principale.

Par exemple, lesdites parties formant support sont stockées dans un logement prévu dans l'habitacle du véhicule, par exemple sur le plancher ou dans une encoche dans les parois de l'espace coffre, et soient assemblées à la portion principale, par emboîtement de l'extrémité de chaque partie dans une encoche correspondante de la portion principale, pour former plage arrière dans la position de support.

En variante, on pourrait également prévoir que les parties formant support soient fixées à la portion principale par une articulation afin de pivoter lesdites parties formant support de la position de stockage dans laquelle lesdites parties sont repliées sur la portion principale et la position de support, dans laquelle lesdites parties sont déployées en position verticale.

Avantageusement, la plage arrière est également configurée pour passer de l'une ou l'autre de la position de stockage ou de support à une position d'utilisation, dans laquelle ladite plage arrière forme une table.

Par exemple, dans la position de support, le plancher secondaire est solidaire des parois latérales de l'espace de coffre, par exemple par emboitage dans une rainure de guidage inférieure correspondante dans chaque paroi latérale.

En variante, on pourrait prévoir que le plancher secondaire comprenne des ergots transversaux coopérant avec des encoches complémentaires inférieures prévues dans les parois latérales de l'espace de coffre dans la position de support.

Avantageusement, le véhicule comprend en outre une plage de séparation solidaire du véhicule automobile et s'étendant depuis la plage arrière vers l'arrière de l'espace du coffre.

Ainsi, dans la position de stockage, l'espace de coffre n'est pas visible depuis l'extérieur du véhicule.

Par ailleurs, une telle plage de séparation permet de réduire les nuisances sonores provenant de l'extérieur du véhicule.

La plage de séparation comprend des ergots transversaux coopérant avec des encoches complémentaires supérieures prévues dans les parois latérales de l'espace de coffre.

Par exemple, la plage arrière peut être réalisée en matériau plastique, par exemple muni sur l'une de ses faces d'un nervurage en nid d'abeille pour concilier finesse, structure et rigidité à la surface support.

En variante, la plage arrière pourrait être réalisée en matériau métallique, tel que par exemple de l'aluminium.

Selon un second aspect, l'invention concerne un procédé de transformation de l'habitacle d'un véhicule automobile tel que décrit précédemment, en espace de couchage.

Selon le procédé :
- on désolidarise la plage arrière du véhicule, par exemple par désencliquetage de la portion principale et/ou des parties formant support des parois latérales de l'espace de coffre,
- on bascule la deuxième rangée de siège dans la position repliée dans laquelle le dossier et rapproché de l'assise correspondante et dans laquelle le dossier s'étend selon l'axe longitudinal du véhicule, sensiblement parallèle au plancher ; et
- on manipule la plage arrière pour la faire passer de la position de stockage dans la position de support.

Avantageusement, le procédé comprend une étape de manipulation du plancher secondaire dans la position de support, dans laquelle, le plancher secondaire s'étend depuis la deuxième rangée de siège en partie dans l'espace coffre dans la continuité longitudinale de la surface supérieure du dossier de ladite deuxième rangée, du côté opposé à la plage arrière.

Par exemple, lors de la manipulation de la plage arrière, les parties formant support se retrouvent en appui sur le plancher et la portion principale s'étend entre la première et la deuxième rangées de siège.

Par exemple, lors de la manipulation du plancher secondaire, les le plancher secondaire est emboité dans les rails ou rainures de guidage inférieurs prévus sur les parois latérales de l'espace de coffre.

Les rainures de guidage inférieures s'étendent selon l'axe longitudinal et sont parallèles entre elles.

Lorsque le véhicule comprend une plage de séparation, on peut prévoir une étape préalable de désolidarisation de ladite plage de séparation du véhicule, par désencliquetage des ergots du rail supérieur correspondants dans les parois latérales de l'espace de coffre et le rangement ultérieur dans l'espace de coffre, par exemple sous le plancher secondaire en position de support.

On pourrait également prévoir une étape lors de laquelle le volume du coffre est vidé par l'utilisateur.

On notera que l'on pourrait prévoir l'étape de basculement de la deuxième rangée de siège après l'étape de manipulation de la plage arrière.

La manipulation de la plage arrière consiste, par exemple, à renverser la plage arrière pour que les parties formant support s'étendent depuis la portion principale vers le bas.

Dans le cas où les parties formant support sont distinctes de la portion principale, l'étape de manipulation comprend une étape lors de laquelle on emboite lesdites parties formant support avec la portion principale.

Dans le cas où les parties formant support sont distinctes de la portion principale mais reliées à ladite portion principale par une articulation, l'étape de manipulation comprend une étape lors de laquelle lesdites parties formant support sont pivotées dans la position de support.

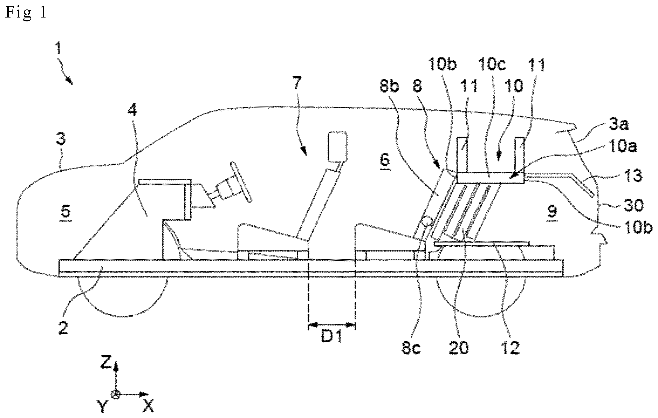

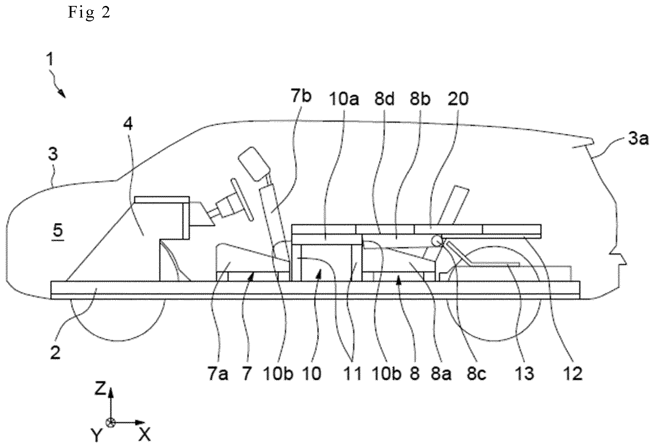

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1]
   illustre de manière très schématique l'habitacle d'un véhicule automobile selon l'invention ; et
[Fig.2]
   représente l'habitacle du véhicule de la figure 1 après transformation en espace de couchage ;
[Fig.3]
   est une vue de derrière du véhicule automobile de la figure 1 ;
[Fig.4]
   est une vue de derrière du véhicule automobile de la figure 2 ;
[Fig.5]
   illustre la planche arrière du véhicule automobile de la figure 1 transformée en table ; et
[Fig.6]
   représente un organigramme d'un procédé de transformation de l'habitacle du véhicule de la figure 1 en un espace de couchage.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

Les figures 1 et 2 illustrent un exemple d'un véhicule automobile 1 comprenant un plancher 2 s'étendant dans un plan XY comprenant l'axe longitudinal X et l'axe transversal Y du véhicule et une carrosserie 3 délimitant le contour du véhicule.

Le véhicule 1 comprend notamment un tablier avant 4 délimitant un espace moteur 5 d'un habitacle 6 du véhicule.

L'habitacle 6 comprend une première rangée de sièges 7, ici un siège conducteur et un siège passager avant et une deuxième rangée de siège(s) 8 située à l'arrière de la première rangée de sièges 7 et espacés d'une distance longitudinale D1.

La distance longitudinale D1 est comprise entre 15cm et 50cm.

Chaque siège de la première rangée de sièges 7 et/ou la deuxième rangée de siège(s) 8 est monté coulissant selon l'axe longitudinal par rapport au plancher 2 du véhicule, par exemple dans des rails dédiés.

La deuxième rangée de sièges 8 peut comprendre un seul siège délimitant deux ou trois assises ou comprendre deux ou trois parties délimitant chacune une ou deux assises.

Chaque siège 7, 8 comprend une assise 7a, 8a et un dossier 7b, 8b articulé par rapport à l'assise correspondante 7a, 8a selon un axe d'articulation transversal entre une position d'utilisation, dans laquelle l'assise et le dossier forment un angle compris entre 80° et 120° l'un par rapport à l'autre et une position repliée dans laquelle le dossier et rapproché de l'assise correspondante.

La liaison des sièges au plancher, ainsi que la configuration des sièges est connu en soi et ne sera pas davantage décrite.

Le(s) siège(s) de la deuxième rangée de siège 8 sont configurés pour que, dans la position repliée, le dossier 8b s'étende selon l'axe longitudinal X du véhicule, sensiblement parallèle au plancher.

Ainsi, l'articulation transversale 8c reliant le dossier 8b et l'assise 8a du(des) siège(s) de la deuxième rangée de siège 8 est montée en translation dans un rail dédié (non représenté) solidaire de l'assise 8a et du dossier 8b, de sorte que lors du pivotement du dossier 8b autour de l'articulation 8c, l'articulation 8c se déplace verticalement vers le haut selon l'axe vertical Z pour permettre au dossier 8b d'adopter une position parallèle à l'axe longitudinal X du véhicule, c'est-à-dire la plus horizontale possible.

L'horizontalité du dossier 8b dépend de l'horizontalité de la route et du chargement du véhicule.

Le véhicule 1 comprend en outre un espace de coffre 9 situé à l'arrière de la deuxième rangée de siège(s) 8 et accessible par l'utilisateur une fois la porte du coffre 3a du véhicule ouverte.

Le véhicule 1 comprend en outre une plage arrière 10 solidaire du véhicule 1 dans une position de stockage.

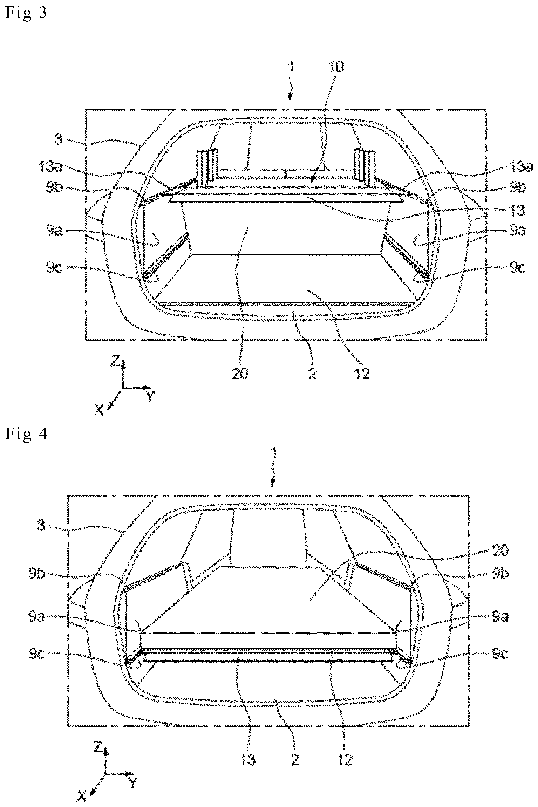

La plage arrière 10 est configurée pour passer de la position de stockage, visible sur les figures 1 et 3, dans laquelle la plage arrière 10 s'étend en partie dans l'espace de coffre 9 et une position de support, visible sur les figures 2 et 4, dans laquelle, dans la position repliée de la deuxième rangée de siège(s) 8, la plage arrière 10 s'étend entre la première et la deuxième rangée de sièges 7, 8 dans la continuité longitudinale de la surface supérieure 8d des dossiers de la deuxième rangée de sièges 8.

Dans la position de stockage, visible sur la figure 1, la plage arrière 10 s'étendant depuis une extrémité supérieure des dossiers 8b de la deuxième rangée de siège(s) 8 selon l'axe longitudinal X vers l'arrière du véhicule et recouvre en partie l'espace de coffre 9.

La plage arrière 10 comprend une portion principale plane 10a délimitée latéralement par deux côtés transversaux 10b et deux côtés longitudinaux 10c.

Les côtés transversaux 10b présentent une longueur supérieure à la longueur des côtés longitudinaux 10c, de manière à conférer à la portion principale plane 10a une forme de rectangle.

La dimension longitudinale des côtés longitudinaux 10c est inférieure à la distance longitudinale D1 entre la première et la deuxième rangée de sièges 7, 8.

Tel qu'illustré sur la figure 3, dans la position de stockage, les côtés longitudinaux 10c de la plage arrière 10 sont solidaires des parois latérales 9a de l'espace de coffre 9, ici par emboitage dans une rainure de guidage supérieure 9b correspondante dans chaque paroi latérale 9a.

Tel qu'illustré, la plage arrière 10 comprend en outre des parties 11 formant support de la portion principale 10a dans la position de support, visible sur la figure 2.

Dans la position de support, chaque partie formant support 11 s'étend verticalement, selon une direction perpendiculaire à la portion principale 10a de la plage arrière et est en appui sur la surface supérieure du plancher 2.

Tel qu'illustré, la plage arrière 10 comprend quatre parties formant support 11 situées à chaque coin de la portion principale 10a.

En variante, on pourrait prévoir trois parties formant support 11 ou une seule partie formant support 11 située au centre de la portion principale 10a.

Les parties formant support 11 forment des pieds de support pour la portion principale 10a.

Tel qu'illustré, dans la position de stockage, les parties formant support 11 s'étendent verticalement vers le toit du véhicule. On pourrait prévoir des rainures verticales dans les parois latérales 9a de l'espace de coffre 9 destinées chacune à recevoir une partie formant support 11.

La plage arrière 10 est ici formée de manière monobloc, par exemple par injection plastique.

On pourrait également prévoir que les parties formant support 11 soient distinctes de la portion principale 10a et stockées dans un logement (non représenté) prévu dans l'habitacle du véhicule, par exemple sur le plancher ou dans une encoche dans les parois de l'espace coffre, et soient assemblées à la portion principale 10a, par emboîtement de l'extrémité de chaque partie 11 dans une encoche correspondante de la portion principale 10a, pour former plage arrière dans la position de support.

On pourrait également prévoir que les parties formant support 11 soient distinctes de la portion principale 10a et fixées à la portion principale 10a par une articulation (non représentée) afin de pivoter lesdites parties formant support 11 de la position de stockage dans laquelle lesdites parties 11 sont repliées sur la portion principale 10a et la position de support, dans laquelle lesdites parties 11 sont déployées en position verticale.

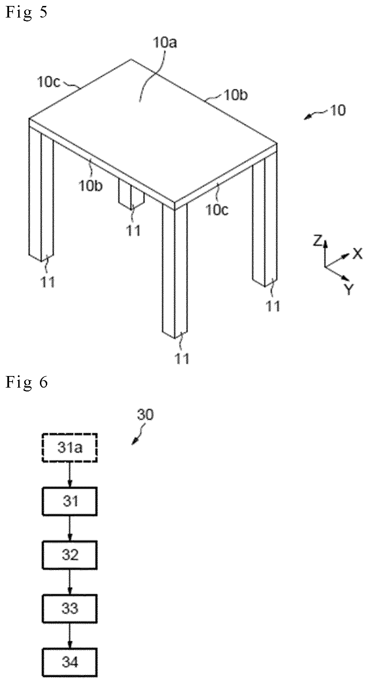

La plage arrière 10 est également configurée pour passer de l'une ou l'autre de la position de stockage ou de support à une position d'utilisation, dans laquelle ladite plage arrière forme une table, tel qu'illustré sur la figure 5.

Le véhicule automobile 1 comprend en outre un plancher secondaire 12 solidaire du véhicule automobile dans la position de stockage et dans la position de support.

Le plancher secondaire 12 est configuré pour passer de la position de stockage, visible sur les figures 1 et 3, dans laquelle le plancher secondaire 12 obstrue un logement (non représenté) prévu dans le plancher 2 du véhicule, généralement comprenant des accessoires tels que les triangles de signalisation, etc...,et une position de support, visible sur les figures 2 et 4, dans laquelle, dans la position repliée de la deuxième rangée de siège(s) 8, le plancher secondaire 12 s'étend depuis la deuxième rangée de sièges 8 en partie dans l'espace coffre 9 dans la continuité longitudinale de la surface supérieure 8d des dossiers de la deuxième rangée de sièges 8.

Ainsi, dans la position de support, la portion principale 10a de la plage arrière 10, la surface supérieure 8d des dossiers 8b de la deuxième rangée de sièges 8 et le plancher secondaire 12 forment ensemble une surface de support plane s'étendant dans le plan XY, sensiblement horizontale, configurée pour recevoir un équipement, tel qu'un matelas 20 ou un sommier supplémentaire.

La surface de support est située à une hauteur du toit du véhicule suffisamment grande pour permettre à l'utilisateur d'être assis sans toucher le toit. La distance entre la surface de support et le toit du véhicule est comprise entre 50cm et 1,50m.

De préférence, la surface de support est située à une hauteur sous les ouvrants (non représentés) du véhicule afin d'éviter tout endommagement accidentel desdites ouvrants.

Dans la position de support, le plancher secondaire 12 est ici solidaire des parois latérales 9a de l'espace de coffre 9, ici par emboitage dans une rainure de guidage inférieure 9c correspondante dans chaque paroi latérale 9a.

En variante, on pourrait prévoir que le plancher secondaire 12 comprenne des ergots transversaux coopérant avec des encoches complémentaires inférieures prévues dans les parois latérales 9a de l'espace de coffre 9 dans la position de support.

Le véhicule automobile 1 comprend en outre une plage de séparation 13 solidaire du véhicule automobile dans la position de stockage.

Dans la position de stockage, la plage de séparation 13 s'étend depuis la plage arrière 10 vers l'arrière du coffre 9.

Ainsi, dans la position de stockage, l'espace de coffre 9 n'est pas visible depuis l'extérieur du véhicule.

Par ailleurs, une telle plage de séparation 13 permet de réduire les nuisances sonores provenant de l'extérieur du véhicule 1.

La plage de séparation 13 comprend des ergots transversaux 13a coopérant avec le rail supérieur 9b prévu dans les parois latérales 9a de l'espace de coffre.

En variante, on pourrait prévoir que les ergots 13a de la plage de séparation 13 coopèrent avec des encoches complémentaires supérieures prévues dans les parois latérales 9a de l'espace de coffre 9 et distinctes du rail 9b

La plage arrière 10 peut être réalisée en matériau plastique, par exemple muni sur l'une de ses faces d'un nervurage en nid d'abeille pour concilier finesse, structure et rigidité à la surface support.

En variante, la plage arrière 10 pourrait être réalisée en matériau métallique, tel que par exemple de l'aluminium.

La figure 6 illustre les étapes d'un procédé 30 de transformation de l'habitacle 6 du véhicule 1 en espace de couchage.

Lors d'une première étape 31, on désolidarise la plage arrière 10 du véhicule, par désencliquetage de la portion principale 10a et/ou des parties formant support 11 des parois latérales 9a de l'espace de coffre 9.

Lorsque le véhicule comprend une plage de séparation 13, on peut prévoir une étape préalable 31a de désolidarisation de ladite plage de séparation 13 du véhicule, par désencliquetage des ergots 13a du rail de guidage supérieur 9b correspondant dans les parois latérales 9a de l'espace de coffre 9 et le rangement ultérieur dans l'espace de coffre 9, par exemple sous le plancher secondaire 12 en position de support.

On pourrait également prévoir une étape lors de laquelle le volume du coffre est vidé par l'utilisateur.

Le procédé 30 comprend en outre une étape 32 lors de laquelle on bascule la deuxième rangée de siège(s) 8 dans la position repliée dans laquelle le dossier et rapproché de l'assise correspondante et dans laquelle le dossier 8b s'étend selon l'axe longitudinal X du véhicule, sensiblement parallèle au plancher 2.

La plage arrière 10 est ensuite manipulée, lors de l'étape 33, pour se retrouver dans la position de support, dans laquelle les parties formant support 11 se retrouvent en appui sur le plancher 2 et la portion principale 10a s'étend entre la première et la deuxième rangée de sièges 7, 8.

On notera que l'on pourrait prévoir l'étape 32 de basculement de la deuxième rangée de siège(s) 8 après l'étape de manipulation de la plage arrière 10.

La manipulation de la plage arrière 10, dans le mode de réalisation illustré, consiste à renverser la plage arrière 10 pour que les parties formant support 11 s'étendent depuis la portion principale 10a vers le bas.

Dans le cas où les parties formant support 11 sont distinctes de la portion principale 10a, l'étape de manipulation comprend une étape lors de laquelle on emboite lesdites parties formant support 11 avec la portion principale 10a.

Dans le cas où les parties formant support 11 sont distinctes de la portion principale 10 mais reliées à ladite portion principale 10a par une articulation, l'étape de manipulation comprend une étape lors de laquelle lesdites parties formant support 11 sont pivotées dans la position de support.

Le procédé 30 comprend en outre une étape 34 lors de laquelle on manipule le plancher secondaire 12 pour l'emboîter dans les rainures de guidage inférieures 9c.

Grâce à la plage arrière 10 multifonction, on bénéficie d'un équipement intégré à la conception du véhicule capable de jouer le rôle de support pour un matelas de couchage et de table.

## Revendications

1. Véhicule (1) automobile comprenant un plancher (2) s'étendant dans un plan (XY) comprenant un axe longitudinal (X) et un axe transversal (Y), un habitacle (6) comprenant une première rangée (7) d'au moins un siège et une deuxième rangée (8) d'au moins un siège espacé d'une distance longitudinale (D1) de la première rangée (7), le siège de la deuxième rangée (8) comprenant une assise (8a) et un dossier (8b) articulé par rapport à l'assise (8a) selon un axe d'articulation transversal (8c) entre une position d'utilisation, dans laquelle l'assise et le dossier (8a, 8b) forment un angle compris entre 80° et 120° l'un par rapport à l'autre et une position repliée dans laquelle le dossier (8b) et rapproché de l'assise correspondante (8a) et s'étend selon l'axe longitudinal (X) du véhicule, le véhicule (1) comprenant en outre un espace de coffre (9) situé à l'arrière de la deuxième rangée (8) de siège, **caractérisé en ce qu'**il comprend une plage arrière (10) multifonction configurée pour passer d'une position de stockage dans laquelle la plage arrière (10) est solidaire du véhicule (1) et s'étend depuis une extrémité supérieure d du dossier de la deuxième rangée (8) de siège selon l'axe longitudinal (X) en partie dans l'espace de coffre (9) et une position de support, dans laquelle, dans la position repliée de la deuxième rangée (8) de siège, la plage arrière (10) s'étend dans la distance longitudinale (D1) entre la première et la deuxième rangées de siège (7, 8) dans la continuité longitudinale d'une surface supérieure (8d) du dossier de la deuxième rangée (8) de siège.

2. Véhicule (1) selon la revendication 1, comprenant en outre un plancher secondaire (12) solidaire du véhicule automobile dans la position de stockage et dans la position de support et configuré pour passer de la position de stockage, dans laquelle le plancher secondaire (13) obstrue un logement dans le plancher (2) du véhicule et la position de support, dans laquelle, le plancher secondaire (12) s'étend depuis la deuxième rangée (8) de siège en partie dans l'espace coffre (9) dans la continuité longitudinale de la surface supérieure (8d) du dossier (8b) de ladite deuxième rangée (8), du côté opposé à la plage arrière (10).

3. Véhicule (1) selon la revendication 1 ou 2, dans lequel dans lequel la plage arrière (10) comprend une portion principale sensiblement plane (10a) délimitée latéralement par deux côtés transversaux (10b) et deux côtés longitudinaux (10c) et au moins une partie (11) formant support de la portion principale (10a) dans la position de support.

4. Véhicule (1) selon la revendication 3, dans lequel dans la position de support, la partie formant support (11) s'étend verticalement, selon une direction perpendiculaire à la portion principale (10a) de la plage arrière (10) et est en appui sur la surface supérieure du plancher (2).

5. Véhicule (1) selon la revendication 3 ou 4, dans lequel la plage arrière (10) comprend quatre parties formant support (11) situées à chaque coin de la portion principale (10a).

6. Véhicule (1) selon l'une quelconque des revendications 3 à 5, dans lequel dans la position de stockage, les côtés longitudinaux (10c) de la portion principale (10a) de la plage arrière (10) sont solidaires des parois latérales (9a) de l'espace de coffre (9).

7. Véhicule (1) selon l'une quelconque des revendications 3 à 6, dans lequel dans la position de stockage, les parties formant support (11) s'étendent verticalement vers le toit du véhicule et sont configurées pour coopérer avec des rainures verticales dans les parois latérales (9a) de l'espace de coffre (9).

8. Véhicule (1) selon l'une quelconque des revendications précédentes, dans lequel la plage arrière (10) est formée de manière monobloc.

9. Véhicule (1) selon l'une quelconque des revendications 3 à 7, dans lequel les parties formant support (11) sont distinctes de la portion principale (10a).

10. Véhicule (1) selon l'une quelconque des revendications précédentes, dans lequel la plage arrière (10) est également configurée pour passer de l'une ou l'autre de la position de stockage ou de support à une position d'utilisation, dans laquelle ladite plage arrière forme une table.

11. Véhicule (1) selon la revendication 2 en combinaison avec l'une quelconque des revendications précédentes, dans lequel dans la position de support, le plancher secondaire (12) coopère avec des rainures de guidage inférieures (9c) prévues dans les parois latérales (9a) de l'espace de coffre (9).

12. Véhicule (1) selon l'une quelconque des revendications précédentes, comprenant en outre une plage de séparation (13) solidaire du véhicule automobile et s'étendant depuis la plage arrière (10) vers l'arrière de l'espace du coffre (9).

13. Procédé (30) de transformation de l'habitacle (6) d'un véhicule (1) automobile selon l'une quelconque des revendications précédentes, en espace de couchage, dans lequel :
- on désolidarise la plage arrière (10) de l'espace de coffre (9),
- on bascule la deuxième rangée (8) de siège dans la position repliée dans laquelle le dossier et rapproché de l'assise correspondante et dans laquelle le dossier (8b) s'étend selon l'axe longitudinal (X) du véhicule, sensiblement parallèle au plancher (1) ; et
- on manipule la plage arrière (10) pour la faire passer de la position de stockage dans la position de support.

14. Procédé (30) selon les revendications 2 et 13, comprenant une étape de manipulation du plancher secondaire (12) dans la position de support, dans laquelle, le plancher secondaire (12) s'étend depuis la deuxième rangée (8) de siège en partie dans l'espace coffre (9) dans la continuité longitudinale de la surface supérieure (8d) du dossier (8b) de ladite deuxième rangée (8), du côté opposé à la plage arrière (10).
